# EUROPEAN PATENT SPECIFICATION

(11) **EP 1 944 182 B1**
(45) Date of publication and mention of the grant of the patent: **18.03.2009**
(21) Application number: 07100504.5
(22) Date of filing: 12.01.2007
(51) Int. Cl.: B60J 10/00

(54) **Fastening strip for use with a seal to seal a window in a vehicle door**
Befestigungsleiste zur Verwendung mit einer Abdichtung zum Abdichten eines Fensters einer Fahrzeugtür
Bande de fixation à utiliser avec un joint pour sceller une fenêtre de porte de véhicule

(43) Date of publication of application: 16.07.2008
(73) Proprietor: Rainforest R&D Limited, Mullingar, County Westmeath (IE)
(72) Inventor: O'Sullivan, Tony, Mullingar, County Westmeath (IE); Hyland, Tom, Mullingar, County Westmeath (IE)
(74) Representative: Moore, Barry

(56) References cited:
- EP-A- 0 193 011
- GB-A- 941 057
- JP-A- 4 238 728
- JP-A- 9 240 283
- JP-A- 2003 146 086
- US-A- 3 720 030
- US-A- 3 968 613
- US-A- 4 270 328
- US-A- 5 743 047

## Description

### Field of the Invention

The present invention relates to vehicle seal and fastening strip for sealing a window pane in a door of a motor vehicle.

### Background

In the prior art, a seal and strip arrangement are provided for simultaneously sealing a door window pane and the door opening on a motor vehicle. US5743047 for example, describes such an arrangement.

US3968613 describes a trim moulding assembly in which a resilient pad is provided with a longitudinal slit for receiving a retention feature of a fastener. The retention feature bering an integral tongue-like fastener extension configured to project into the slit and the pad. The fastener extension is inserted into the slit through the opening thereof.

However, in the processes of manufacturing such as vehicle manufacture, there are ever increasing demands for increased efficiency, and for components that are easy to manufacture and to assemble. There are also ever increasing demands for quality, for example improved seal quality.

### Summary Of The Invention

These needs and others are addressed by a fastening strip and a seal for sealing a window in a vehicle door according to the teaching of the invention.

According to a first aspect the invention provides a fastening strip and a seal in accordance with claim 1. Advantageous features are provided in dependent claims 2-19.

According to a second aspect the invention provides a method of attaching a fastening strip to a seal in accordance with claim 20. Advantageous features are provided in accordance with dependent claims 21 to 26.

### Brief Description Of The Drawings

The present invention will now be described with reference to the accompanying drawings in which:
Fig. 1A is a cross sectional view of a seal and fastening strip attached to a flange of a vehicle door; Fig. 1B is a detailed view of Fig. 1A; Fig. 1C is a cutaway cross-sectional view through the axis Y-Y of the fastening strip from the direction R;
Fig. 2A is a cross sectional view of an alternative seal and fastening strip according to the invention; Fig. 2B is a detailed view Fig. 2B;
Fig. 3A is a cross-sectional view of an alternative fastening strip according to the invention; Fig. 3B is a detailed view of Fig. 3A;
Fig. 4A is a cross-sectional view of the fastening strip of Fig. 3A used with an alternative seal according to the invention; Fig. 4B is a detailed view of Fig. 4A;

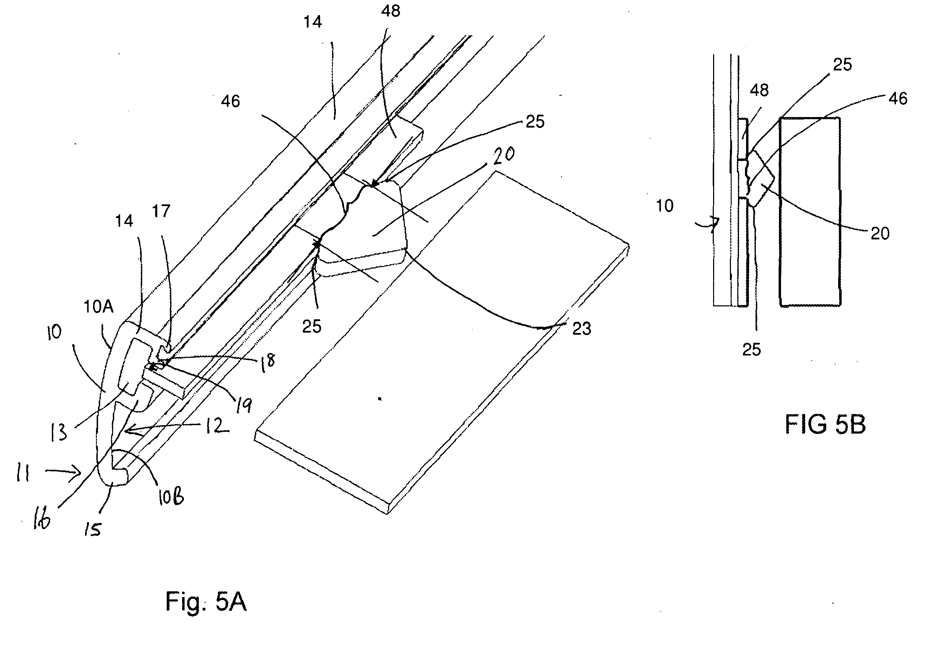

Fig. 5A is a schematic perspective view of a fastening strip according to the invention; Fig. 5B is a plan view from above of the fastening strip of Fig. 5A;
Fig. 6 is a perspective view from the back of a fastening strip according to the invention;
Fig. 7 is a detailed view of the portion A of Fig. 6;
Figs. 8 and 9 show a seal and a fastening strip according to the invention,

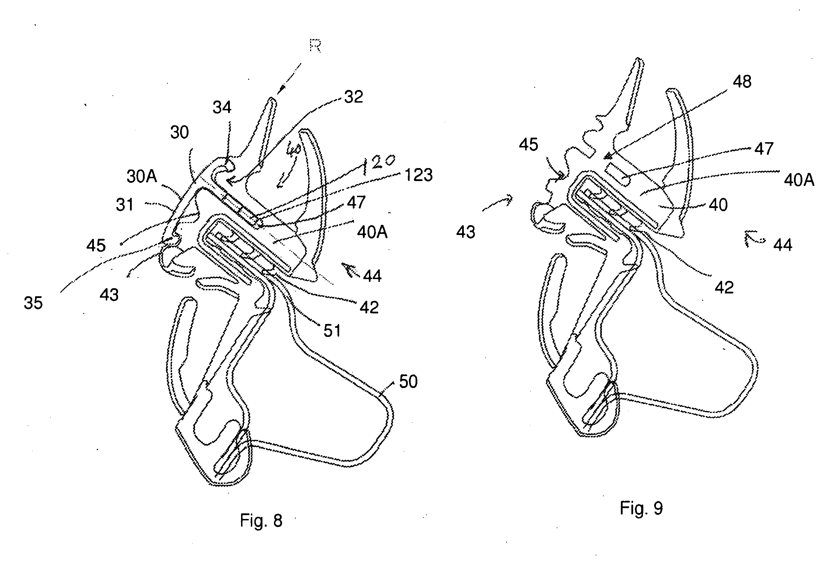

Fig. 8 shows a retention feature of the fastening strip in place in the seal and
Fig. 9 shows the seal before the retention feature is inserted;

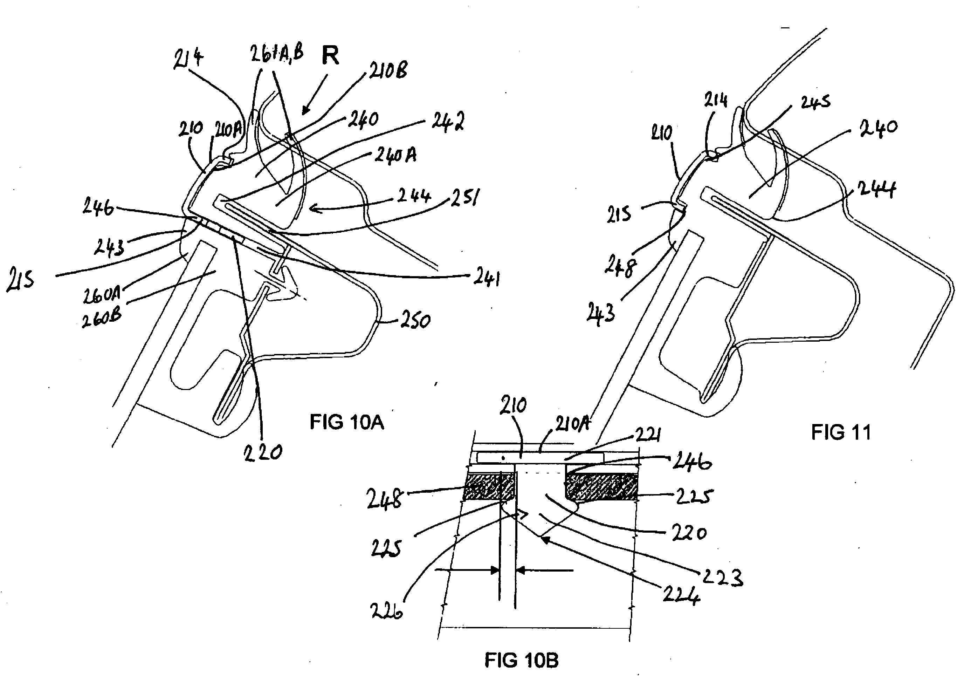

Fig. 10A is a cross-sectional view of a seal and a fastening strip according to an alternative embodiment of the invention, showing a retention feature of the fastening engaging the seal; Fig. 10B is a cutaway cross-sectional view through the axis Y-Y of the fastening strip from the direction R;
Fig. 11 is a cross-sectional view of a portion of the seal where there is no retention feature of the fastening strip passing through the seal;

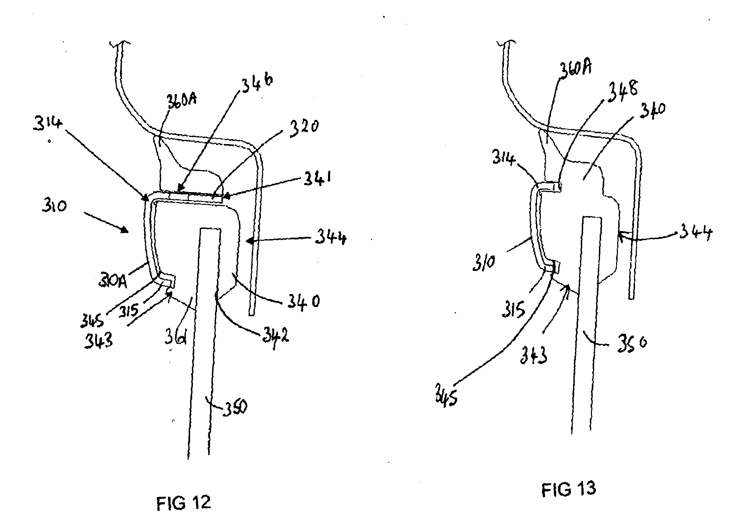

Figs. 12 and 13 are cross-sectional views of a seal and a fastening strip applied to an encapsulated glass window according to an alternative embodiment of the invention; in Fig. 12 a retention feature of the fastening strip is passing through the seal; in Fig. 13 there is no retention feature passing through the fastening strip;

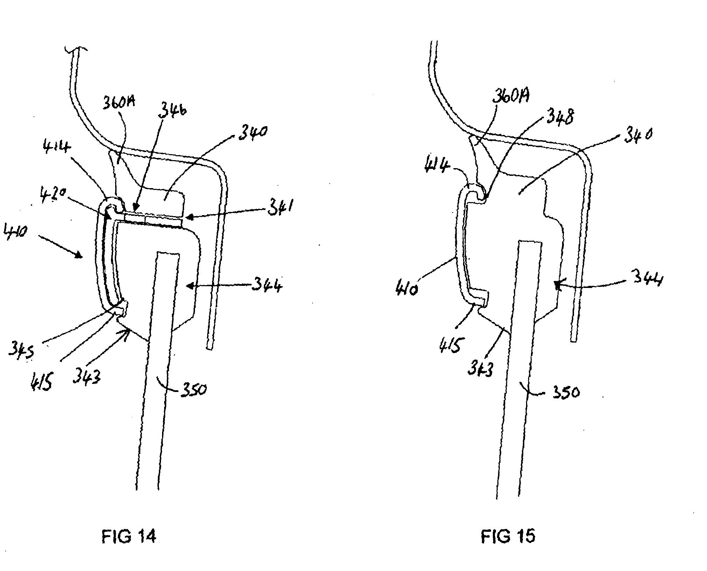

Figs. 14 and 15 are cross-sectional views of a seal and a fastening strip applied to an encapsulated glass window according to an alternative embodiment of the invention; in Fig. 14 a retention feature of the fastening strip is passing through the seal; in Fig. 15 there is no retention feature passing through the fastening strip;

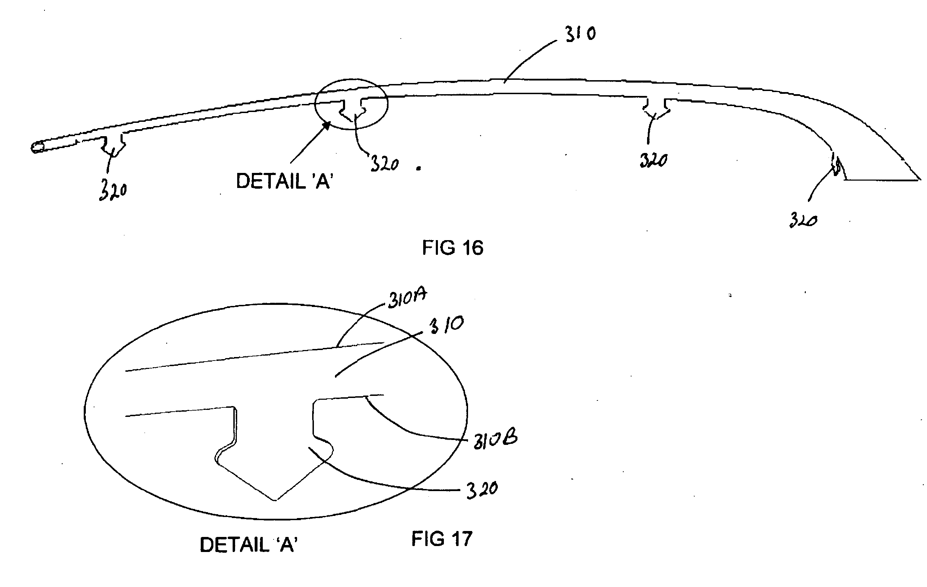

Fig. 16 is a perspective view of a seal strip of an alternative embodiment of the invention;

### Detailed Description Of The Drawings

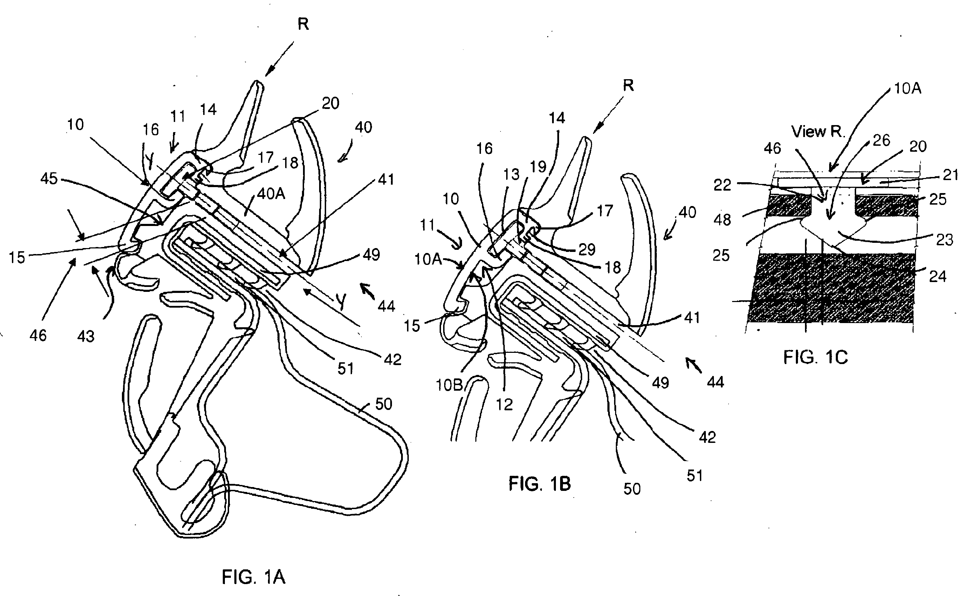

Referring to the drawings, and initially in particular Figs. 1 to 2 a seal 40 and fastening strip 10 are provided for sealing a door window pane and the door opening on a motor vehicle. In use, the seal 40 is connected between and to, a flat flange 51 of the door 50 of the vehicle and the fastening strip 10.

In the specification, the term fastening strip has been used to describe the outer finishing strip applied to the seal. In the art, terms including trim, trim moulding, finishing strip, or trim moulding finishing strip may also be used to describe this component, and it is not intended to limit the scope of the invention to any one specific wording as the functionality of a fastening strip in accordance with the teaching of the invention will be apparent irrespective of the wording applied to same.

The seal 40 comprises a main seal body 40A, an inner side 44 which in use is arranged to face towards and/or to abut a portion of the vehicle door, and an outer fastening side 43 which in use faces outwardly from the vehicle and abuts the fastening strip 10. The outer fastening side 43 comprises a recess 45 for receiving the fastening strip.

The seal 40 includes sealing lips which bear against the window pane when it is closed. The seal further includes sealing lips which bear against the vehicle when the door is closed. Such seal arrangements are known in the art and are not further described here.

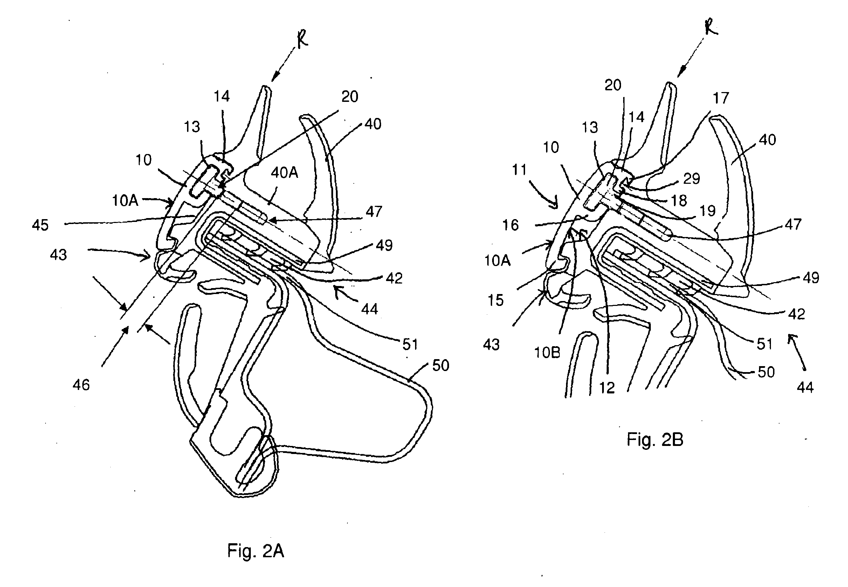

The seal 40 comprises a first receiver 42 for receiving the flange 51 of the door and a second receiver for receiving a retention element of the fastening strip. The second receiver may comprise a through hole 41 which is open to the inner side 44 of the seal (Figs. 1A and 1B) or a blind hole 47 which is closed to the inner side 44 of the seal (Figs. 2A and 2B). Both the through hole 41 and the blind hole 47 comprise a cover portion 48 which is pierced or cut at intervals to form perforations 46 to allow a retention element of the fastening strip 10 to pass through the cover portion 48. The cover portion 48 is arranged near the outer fastening side 43 of the receiver. The blind hole 47 arrangement provides a continuous uninterrupted seal prevent water ingress.

The seal 40 is manufactured for example by rubber moulding or by extrusion, and has such will have an inherent flexibility or resilience. The receivers 41 and 47 may be formed as a cavity extruded into the profile of the seal. The cavity having a solid cover portion 48 which is cut locally to form perforations 46.

A reinforcing element 49 may be provided in the seal located near the receivers 41 or 47 and 42 as shown in the illustrated example embodiments. The reinforcing element 49 may be arranged generally parallel to the walls of the receivers. Such seal reinforcing elements are known in the art and are not described here in further detail.

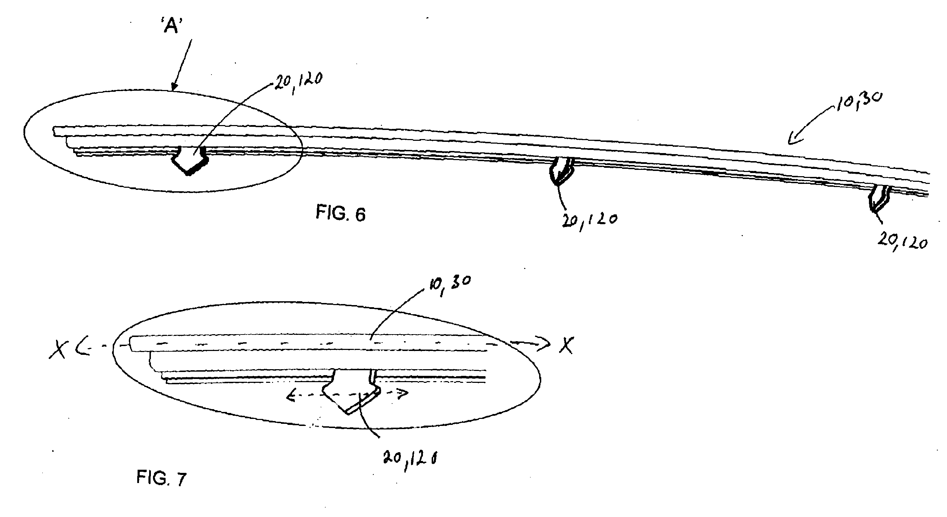

The fastening strip 10 has a first outer decorative side 11 which in use is exposed and a second inner fastening side 12 which in use abuts the seal. The fastening strip 10 is manufactured as a strip or web and may be comprised of aluminium, stainless steel or plastic. The fastening strip 10 comprises a longitudinal axis X-X as shown in Fig. 7.

The fastening strip 10 comprises an outer surface 10A which in this case is slightly curved in form across the width thereof, and an inner surface 10B. The inner surface of the fastening strip comprises depending members 14, 15 and 16. The depending members 14 and 15 are arranged one at front and one at the back respectively of the strip and the depending member 16 is located there between, in this case substantially near the width wise centre of the fastening strip 10.

The form of the strip and location of the depending members 14, 15 and 16 is such as to correspond to the form of the outer fastening side 43 and the recess 45 of the seal. In use, the fastening strip is seated in the recess 45 of the seal.

Retention elements 20 are provided at spaced apart intervals and depending from the inner side of the strip to the seal. In this case the retention elements 20 comprise separate elements which are retained in the strip 10 by a suitable mechanical means or by means of gluing, adhesive, or by design of the retention element.

The retention element 20 comprises a top portion 21, a stem portion 22 and a head portion 23. The head portion 23 has in this case a v-shaped or arrow form having a point or head 24 and barbs or undercuts 25 which are provided at a base portion of the head. The retention element 20 comprises front and back faces 26 each having a generally planar form. The retention element in this case, as shown in the illustrated examples, has a low profile with the depth of the element being less than the width across the front and back faces thereof. The stem portion 22 spaces the head portion 23 apart from the top portion. The barbs 25 are arranged on opposite sides of the head portion 23. In use, the retention element 20 is arranged such that the front and back faces of the head portion are substantially parallel to the front and back members 14 and 15 of the fastening strip 10 on assembly, and substantially at right angles to the surfaces 10A and 10B thereof.

The pointed form of the head portion 23 assists in assembly of the fastening strip, in the case where the retention element 20 is provided as a separate feature. By using the point of the head portion it is easier to present the retention element.

The pointed form of the head portion additionally assists in assembly of the fastening strip to the seal. Again, as for the reasons above, it is easier to present and achieve engagement of the retention element with the seal by use of a pointed head portion. The barbs serve to ensure that once engagement is achieved that such engagement is maintained.

Localised perforations 46 are provided in sections of the cover portion 48 of the receiver 41, 47 to enable the head portion of the retention element to pass through. The head portion 23 of the retention element 20 is larger than the perforation 46. When assembled the barbs or undercuts 25 are retained against the inside of the perforation 46 in the cover portion 48.

The depending members 14 and 16 together with the inner surface 10B of the fastening strip together define a recess 13 for receiving and retaining one or more retention elements 20 therein. In effect the depending members 14 and 16 function as retainers for retaining a retention element in place. Each of the depending members 14 and 16 comprises an in-turned lip at the end thereof. An opening 19 to the recess 13 is provided between the ends of the depending members 14 and 16. The depending members 14 and 16 are configured to hold the retention element 20 in place in the fastening strip. In effect, the features 14, 16 and 13 of the fastening strip co-operate with the top portion of the retention element 20 to support and securely hold the retention element at the required orientation and position for engagement with the seal. In this case, the orientation is substantially perpendicular to the inner and outer surfaces of the strip 10. The form of the depending members, recess and top portion of the retention element could clearly be altered to achieve a different orientation of the retention element if required.

The depending member 14 may optionally include additional protrusions for example protrusions 17 and 18 which define a recess 29.

The top portion 21 of the retention element is designed to be received and held in place in the recess 13 of the fastening strip 10. The top portion may be inserted into the recess 13 by insertion from each end of the strip. Alternatively localised slots may be provided at spaced apart intervals in members 14 and/or 16 to enable a retention element 20 to be inserted into the recess 13 near to the desired location. A snap-in characteristic avoiding the need for such slots is also possible. The form of the top portion 21 is such as to accommodate tolerances of profile and of the features 14, 16, and the recess 13 and manufacturing tolerances of top portion 21. The retention elements may additionally be fixed in place in the fastening strip by adhesive, or other suitable means.

The invention thus provides for the separate manufacture of the fastening strip and of the retention elements 20, for assembly to a fastening strip, as required. This has advantages including provision of a simplified manufacturing process, and increased flexibility in location of retention elements to a particular application. The material of the retention element may be selected as required with flexibility.

The walls of the receivers 41 and 47 are straight cut particular or dedicated formations or locators corresponding to formations of the retention element of the fastening strip. The cavity or channel of the receivers 41 and 47 behind the cover portion 48 is extruded into the profile. i.e. the extrusion has a solid cover portion 48 which is cut locally at perforations 46. Here the retention function is achieved by the operation of the head portion of the retention element in the Y plane (as shown in Fig. 1 A) only. This is achieved by the perforation 46 being smaller than the head portion 23 of the retention element.

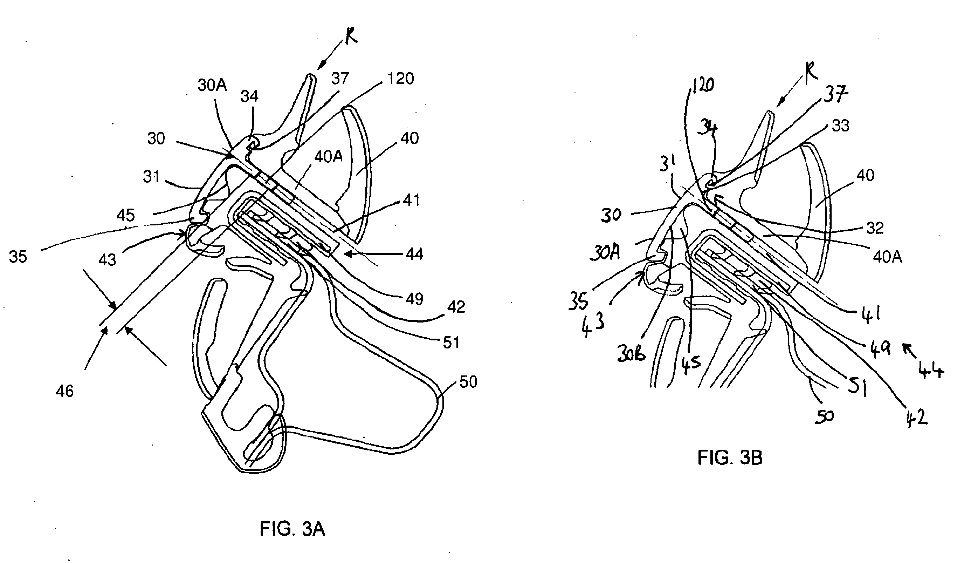

Referring to Figs. 3 to 4 an alternative embodiment of the invention is shown. In this case, a fastening strip 30 comprises integral retention elements 120, which depend from the inner side of the strip 30. The retention elements 120 depend substantially at right angles to surface of the fastening strip and seal. The retention elements 120 in this case are formed as an integral part of the fastening strip and may be of aluminium, stainless steel or plastic.

The fastening strip 30 is designed for fastening to a seal 40 similar that described above, the seal having a main seal body 40A. The same reference numbers have been used to identify similar features which have been described above.

The fastening strip 30 comprises a first outer side 31 which in use is exposed and a second inner fastening side 32 which in use abuts the seal 40. The strip 30 is manufactured as a strip or web and may be comprised of aluminium, stainless steel or plastic.

The fastening strip 30 comprises an outer surface 30A and an inner surface 30B. The outer surface 30A in this case is slightly curved in form across the width thereof. The fastening strip 30 comprises depending members 34, 35 and one or more retention elements 120. The depending members 34 and 35 are arranged one at front and one at the back respectively of the outer surface 30A and the depending retention element 120 is located there between, in this case forward of the width wise centre.

The form and location of the depending members 34, 35 and 120 is such as to correspond to the form of the outer fastening side 43 and the recess 45 of the seal 40. In use the fastening strip is seated in the recess 45.

The retention element 120 comprises a head portion 123 which has a v-shaped or pointed arrow form and barbs 125, similar to the form of the retention element 20. The retention element 120 comprises a top portion 121, a stem portion 122 and a head portion 123. The head portion 123 comprises a v-shaped or arrow type form having a point 124 and barbs or undercuts 125. The retention element 120 comprises front and back faces 126 each having a generally planar form.

The retention element, as shown in the illustrated examples, has a low profile with the depth of the element being less than the width across the front and back faces thereof. The stem portion 122 spaces the head portion 123 apart from the top portion. The barbs 125 are arranged on opposite sides of the head portion 123. In use, the retention element 120 is arranged such that the front and back faces of the head portion are substantially parallel to the front member 34 of the fastening strip 30 on assembly and substantially perpendicular to the top surface 30A thereof.

The pointed form of the head portion 123 assists in assembly of the fastening strip 30 to the seal. In this case sections of the rubber of the cover portion 48 of the seal are pieced to form perforations 46 to enable the head portion of the retention element to pass through the rubber. The perforations are designed to be smaller than the head portion of the retention element, thus when passed through a perforation the barbs 125 engage with and are retained against the inner side of cover portion 48.

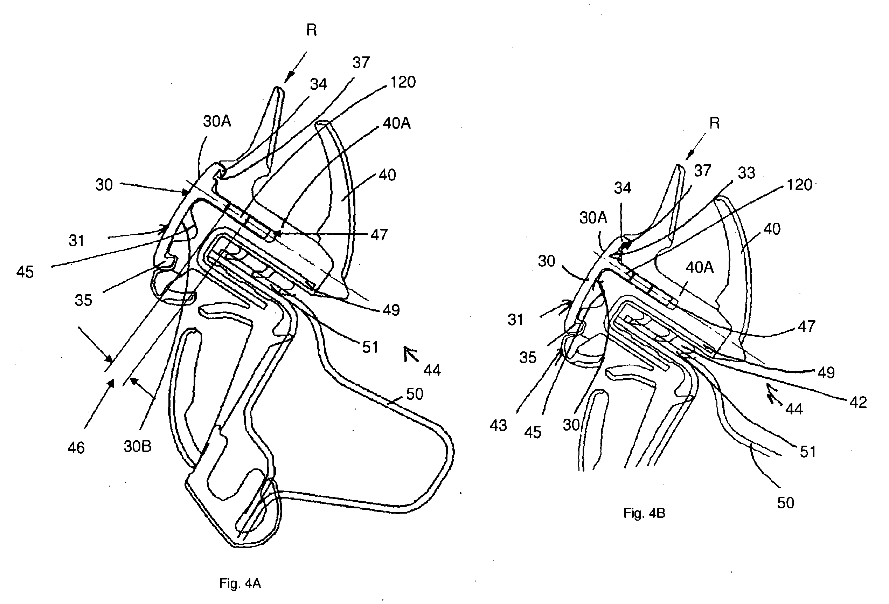

The retention element 120 is designed to be received in the through hole 41 (Figs. 3A and 3B) or blind hole 47 (Figs. 4A and 4B) of the seal 40. In addition the barbs provide retention of the fastening strip 30 to the rubber extrusion at perforations 46 in the cover 48.

Referring to Figs. 6 and 7 a section of fastening strip 10, 30 for use with a seal is shown. The fastening strip has an elongated form and includes in this case three spaced apart retention elements. Three or more retention elements are normally provided located along the length of the interface between the seal and the fastener to achieve the necessary alignment between the two items.

Referring to Figs. 8 and 9 an alternative embodiment accordi ng to the invention is shown. The seal 40 as described previously comprises an inner seal side 44 which in use is arranged to face towards and/or to abut a portion of the vehicle door, and an outer fastening side 43 which in use faces outwardly from the vehicle and abuts the fastening strip 30. The outer fastening side 43 comprises a recess 45 for receiving the fastening strip. The seal 40 comprises a receiver 42 for receiving a portion of the vehicle door and a receiver 47 for receiver a retention feature of the fastening strip 30. The fastening strip 30 as described previously comprises a retention feature 120 having a head portion 123 for insertion into and engagement with the seal.

The receiver 47 comprises a cover portion 48 provided between the receiver and outer fastening side of the seal. In this case, the cover portion 48 is continuous and is not pierced at intervals to form perforations; in this case, the cover portion is pierced directly by the head portion 123 of the retention feature 120. The head portion 123 comprises a pointed arrow form, the pointed form enables piercing of the cover portion 48. Barbs 125 at the base of the head portion then engage with the cover portion 48 to securely hold the retention feature in place.

In effect, connection of the retention element to the seal is achieved by the interaction or engagement of the retention element with the seal.

It will be appreciated that other alternative arrangements may also be provided. In one case, the receiver 41, as described previously may be provided with a continuous cover portion (as described above with reference to receiver 47). In an alternative arrangement the receiver may comprise an extruded portion of the seal provided to be pierced by the head portion of the retention element such that it is held in place embedded in the rubber. In this latter case the extruded portion may be of different strength or thickness to other portions of the seal.

Referring to Figs. 10A, 10B and 11 a seal and fastening strip according to an alternative embodiment are shown. The seal 240 comprises an outer fastening side 243 which in use is exposed and abuts a fastening strip and an inner seal side 244 which is use faces and/or abuts the vehicle door.

The seal 240 comprises a main seal body 240A, an inner door connection side 244 which in use is arranged to face towards and connect to the door flange, and an outer fastening side 243 which in use faces and abuts the fastening strip 210. The outer fastening side 243 comprises a recess 245 for receiving the fastening strip.

The seal 240 comprises sealing lips 260A and 260B which bear against the window pane when it is closed. The seal further comprises sealing lips 261 A and 261 B which bear against the car body when the door is closed. Such seal arrangements are known in the art and are not described here in detail.

The seal 240 is manufactured for example by rubber moulding or by extrusion.

The seal 240 comprises a first receiver 242 for receiving the flange 251 of the door and a second receiver for receiving a retention element of the fastening strip. The second receiver may comprise a through hole 241 which is open to the inner side 244 of the seal (Figs. 10A and 11) or a blind hole (not shown) which is closed to the inner side 244 of the seal. The receiver hole 241 comprises a cover portion 248 which is pierced at intervals to form localised perforations 246 to allow a retention element of the fastening strip 210 to pass through the cover portion 248.

The fastening strip 210 comprises a strip or web form having depending members 214 and 215 at first and second ends thereof. The depending member 215 comprises one or more retention elements 220 located at intervals thereon. Fig. 10A shows an arrangement where a retention element 220 is engaging the seal 240. The seal comprises a perforation 246 in the cover portion 248 thereof for receiving the retention element. Fig. 11 shows an arrangement where there is no retention element at that point on the fastening strip, the cover portion 248 of the seal is intact, no perforation 246 has been provided at this point.

In this case the retention element 220 is integrally formed with the fastening strip 210. The spacing of the retention elements 220 may be varied as required. The retention element 220 comprises a form and features similar to the retention element 20, and similar features have been identified by similar reference numbers.

Referring to Figs. 12 to 17 an encapsulated glass seal and fastening strip are shown. In this case the seal is held in place on the glass pane by the fastening strip.

A seal 340, for fastening to a window pane 350, has a first outer side 343 which in use is exposed and abuts the fastening strip, and a second inner side 344 which in use faces and/or abuts a portion of the vehicle.

The seal 340 comprises a first receiver 342 for receiving a portion of the window 350. The seal 340 further comprises receiver 341 for receiving a retention element of a fastening strip 310, 410. The outer fastening side 343 comprises a recess 345 for receiving the fastening strip. In use, the fastening strip is seated in the receiver.

The receiver 341 comprises a cover portion 348 which is pierced at intervals to form localised perforations 346 to allow a retention element of the fastening strip 310 to pass through the cover portion 348.

Referring to Figs. 12 to 17 and initially in particular to Figs. 12 and 13, 15 and 16 a fastening strip 310 is provided for fixing to the seal 340. The fastening strip 310 comprises a web form with first and second depending members 314 and 315 which in use extend in the direction of the seal. The depending member 314 comprises at intervals thereon retention element 320. The retention element 320 is arranged to pass through a perforation provided in the fastening strip.

The retention elements 320 are integral to the fastening strip. The retention elements 320 have a form and features similar to the retention element 120 described above.

Referring to Figs. 12 to 17 and initially in particular to Figs. 14 and 15 a fastening strip 410 is provided for fixing to the seal 340. The fastening strip 410 has a web form and has first and second depending members 414 and 415 which in use extend to the seal. The fastening strip comprises one or more retention elements 420 provided at spaced apart intervals. The retention element 420 is arranged to pass through a perforation 346 provided in thermal 340. The retention element 420 is in this case formed as a separate component for assembly to the fastening strip, and may be retained in the strip 410 for example, by a suitable mechanical means or by means of gluing, adhesive, or by design of the retention element.

The retention element 420 comprises a top portion a stem portion and a head portion. The head portion comprises a v-shaped or arrow type form having a point and barbs or undercuts. The retention element 420 comprises front and back faces each having a generally planar form.

The retention element in this case, as shown in the illustrated examples, has a low profile with the depth of the element being less than the width across the front and back faces thereof. The stem portion spaces the head portion apart from the top portion.

The barbs are arranged on opposite sides of the head portion. In use, the retention element 420 is arranged such that the front and back faces of the head portion are substantially parallel to the front member 414 of the fastening strip 410 on assembly and substantially perpendicular to the top surface thereof. Similarly the front and back faces are oriented such that the lateral axis thereof is substantially parallel to the longitudinal axis of the fastening strip and to the longitudinal axis of the seal.

The retention element is assembled to the seal by passing the head portion thereof through a perforation 346 in the seal. When assembled the barbs or undercuts thereof are retained against the inside of the cover portion 348 of the seal. The perforations being smaller than the head portion of the retention element.

The invention provides a seal and fastening strip for use together to seal the window to a door of a vehicle. The features of the seal and fastening strip of each embodiment are similar. The seal and associated fastening strip arrangements according to the invention has a number of advantages.

One advantage is ease of assembly and avoidance of utilisation of steel clips attached directly to the door frame. Furthermore the components are assembled to provide an improved finish.

The provision of a seal having a cover portion provided over the blind hole or through hole receiver has the advantages of providing an improved seal. In use, the cover acts as an extra sealing layer. This arrangement provides a good sealing performance and prevents water ingress. In the arrangement in which the receiver comprises a blind hole the seal is continuous and fully intact to prevent water ingress.

The arrangement of the invention advantageously provides a fixing means and method that acts longitudinally as opposed to vertically.

There are advantages from the point of view of manufacturing the components of the seal and fastening strip. The seal comprises a receiver for receiving a retention element. In comparison with the prior art, it is not necessary to provide a receiver having particular features or formations corresponding to retention features of the fastening strip to enable fastening of the parts. Manufacture and assembly are thus simplified. For example, it is known in the prior art to provide a receiver having formations corresponding to formations on fastening strip to provide inter-engagement of the respective corresponding components. In contrast to seal and fastening arrangements of the prior art, the walls of the receivers of the seal of the invention do not include particular or dedicated formations or locators corresponding to formations of the retention element of the fastening strip. Here the retention function is achieved by the operation of the head portion of the retention element.

The invention by obviating the need for corresponding formations on the seal receiver and fastening strip retention feature, further provides increased ease of assembly since it is not necessary to align corresponding formations. The problems of tolerance in location of corresponding formations is also overcome.

In one case the retention element is manufactured separately from the strip for assembly thereto, this arrangement has the advantages of ease of manufacture and flexibility. There is flexibility in where retention elements are located. Location can be varied with ease depending on assembly requirements and the form of the vehicle door/window to which the seal is to be assembled. Thus a seal and fastening strip of the invention are suitable for assembly with a variety of different vehicle window/door flange arrangements.

The low profile and the pointed form of the retention element are advantageous from an assembly point of view. The retention element is arranged parallel to the longitudinal axes of the fastening strip, seal and door flange.

The words comprises/comprising when used in this specification are to specify the presence of stated features, integers, steps or components but does not preclude the presence or addition of one or more other features, integers , steps, components or groups thereof.

## Claims

1. A fastening strip (10, 30) and a seal (40) for sealing a window in a vehicle the fastening strip having at least one retention element (20, 120), the seal (40) having a sealing body (40A) and a first outer fastening side (43) which in use abuts the fastening strip and a second inner sealing side (44) which in use faces a portion of the vehicle; and the seal having a receiver (41, 47) for receiving the at least one retention element (20, 120) of the fastening strip
**characterised in that** the retention element (20, 120) comprises a head portion configured to pierce the seal on assembly thereto.

2. The device as claimed in claim 1 wherein the retention element comprises a pointed head portion (23, 123).

3. The device as claimed in claims 1 or 2 wherein the retention element comprises a substantially arrow shaped head portion (23, 123).

4. The device as claimed in claims 1 to 3 the retention element having one or more of barbs (25, 125) to retain it in place in said receiver (41, 47).

5. The device as claimed in claim 4 wherein the barbs (25, 125) comprise undercuts formed at the base of the head portion.

6. The device as claimed in any preceding claim wherein the retention element comprises front and back faces each having a substantially flat form and wherein the retention element is arranged substantially at right angles to the fastening strip.

7. The device as claimed in any preceding claim the fastening strip (10, 30) having an elongate form extending along the longitudinal axis thereof and comprising a plurality of retention elements located at spaced apart intervals along the longitudinal axis of thereof.

8. The device as claimed in any preceding claim wherein the retention element (20) is formed separately from the fastening strip and configured for assembly to the fastening strip.

9. The device as claimed in claim 8 the fastening strip comprises retainer members which together with the inner surface of the strip define a recess for receiving and retaining said retention element.

10. The device as claimed in any preceding claim wherein the retention element (120) is integral to the fastening strip (30).

11. The device as claimed in any preceding claim wherein the receiver comprises a blind hole (47) closed to the inner sealing side of the seal (44).

12. The device as claimed in any of claims 1 to 11 wherein the receiver comprises a through hole (41) open to the inner sealing side (44) of the seal.

13. The device as claimed in any preceding claim wherein the receiver (47) is formed as a cavity or channel extruded in the seal.

14. The device as claimed in any preceding claim wherein the receiver comprises a cover portion (48) located between the receiver (41, 47) and the outer fastening side (43) of the seal.

15. The device as claimed in claim 14 wherein the retention element (20, 120) is configured to pierce the cover portion (48) of the seal on assembly thereto.

16. The device as claimed in any of claims 14 to 15 wherein the barbs (125) of the retention element (20, 120) are configured to engage with the cover portion (48) of the receiver.

17. The device as claimed in claims 14 to 16 wherein the cover portion (48) comprises a continuous form.

18. The device as claimed in claims 14 to 15 wherein the receiver comprises a continuous extruded rubber portion of the seal.

19. The device as claimed in claim 18 wherein the retention element is configured to pierce the receiver on assembly thereto.

20. A method for attaching a fastening strip (10, 30) to a seal (40) for sealing a window in a vehicle, the fastening strip comprising at least one retention element (20, 120), and the seal having a sealing body (40A) and a first outer fastening side (43) which in use abuts the fastening strip and a second inner sealing side (44) which in use faces a portion of the vehicle, the seal having a receiver for receiving a retention element, comprising inserting the retention element into a receiver of the seal, **characterised in that** the method further comprises piercing the seal with the retention element (20, 120) on assembly of the fastening strip.

21. A method as claimed in claim 20 wherein the seal comprises a receiver (42, 47) for receiving the retention element (20, 120), the receiver being located between the inner sealing side (44) and outer fastening side (43) the method further comprising inserting the head portion (20, 120) of the retention element into the receiver (42, 47).

22. A method as claimed in claim 21, the seal comprising a cover portion (48) provided between the receiver (42, 47) and the outer fastening side (43), the cover portion (48) having a continuous form, the method comprising the retention element piercing the cover portion (48).

23. A method as claimed in claims 20 to 22, the retention element (20, 120) having a pointed head portion (23, 123) the method comprising piercing the seal with the pointed head portion (23, 123).

24. The method as claimed in claim 23, the head portion (23, 123) having one or more barbs (25, 125), the method comprising engaging the barbs with the seal.

25. A method as claimed in claim 24, the cover portion comprising an inner surface, the method further comprising engaging the barbs of the head portion with the inner surface of the cover portion to securely hold the retention element in place.

26. A method as claimed in claim 20 to 25, the receiver comprising a continuous portion of the seal, the method further comprising piercing the receiver with the head portion of the retention element and embedding the retention element in the seal.

## Patentansprüche

1. Befestigungsleiste (10, 30) und eine Dichtung (40) zum Abdichten eines Fensters in einem Fahrzeug, wobei die Befestigungsleiste wenigstens ein Rückhalteelement (20, 120) aufweist, die Dichtung (40) einen Dichtungskörper (40A) und eine erste äußere Befestigungsseite (43), die in Benutzung an die Befestigungsleiste angrenzt, und eine zweite innere Dichtungsseite (44), die in Benutzung zu einem Abschnitt des Fahrzeugs weist, aufweist; und wobei die Dichtung eine Aufnahme (41, 47) zum Aufnehmen des wenigstens einen Rückhalteelements (20, 120) der Befestigungsleiste aufweist,
**dadurch gekennzeichnet, dass** das Rückhalteelement (20, 120) einen Kopfabschnitt umfasst, der dafür eingerichtet ist, in die Dichtung bei der Montage darauf einzustechen.

2. Vorrichtung nach Anspruch 1, bei welcher das Rückhalteelement einen spitzen Kopfabschnitt (23, 123) umfasst.

3. Vorrichtung nach Anspruch 1 oder 2, bei welcher das Rückhalteelement einen im Wesentlichen pfeilförmiger Kopfabschnitt (23, 123) umfasst.

4. Vorrichtung nach einem der Ansprüche 1 bis 3, bei welcher das Rückhalteelement einen oder mehrere Widerhaken (25, 125) aufweist, um es in der Aufnahme (41, 47) in der Position zu halten.

5. Vorrichtung nach Anspruch 4, bei welcher die Widerhaken (25, 125) Hinterschneidungen umfassen, die an der Grundseite des Kopfabschnitts ausgebildet sind.

6. Vorrichtung nach einem der vorhergehenden Ansprüche, bei welcher das Rückhalteelement eine Vorderseite und eine Rückseite aufweist, welche jeweils eine im Wesentlichen flache Form aufweisen, und bei welcher das Rückhalteelement im Wesentlichen rechtwinklig zu der Befestigungsleiste angeordnet ist.

7. Vorrichtung nach einem der vorhergehenden Ansprüche, bei welcher die Befestigungsleiste (10, 30) eine längliche Form besitzt, die sich entlang der Längsachse von dieser erstreckt, und mehrere Rückhalteelemente aufweist, die sich in voneinander beabstandeten Intervallen entlang der Längsachse von dieser befinden.

8. Vorrichtung nach einem der vorhergehenden Ansprüche, bei welcher das Rückhalteelement (20) separat von der Befestigungsleiste ausgebildet ist und zum Zusammenbau mit der Befestigungsleiste eingerichtet ist.

9. Vorrichtung nach Anspruch 8, bei welcher die Befestigungsleiste Rückhalteteile aufweist, die zusammen mit der Innenfläche der Leiste eine Vertiefung zur Aufnahme und zur Zurückhaltung der Rückhalteelemente festlegen.

10. Vorrichtung nach einem der vorhergehenden Ansprüche, bei welcher das Rückhalteelement (120) integral mit der Befestigungsleiste (30) ausgebildet ist.

11. Vorrichtung nach einem der vorhergehenden Ansprüche, bei welcher die Aufnahme ein Blindloch (47) umfasst, das zu der inneren Dichtungsseite der Dichtung (44) geschlossen ist.

12. Vorrichtung nach einem der Ansprüche 1 bis 11, bei welcher die Aufnahme ein Durchgangsloch (41) umfasst, das zu der inneren Dichtungsseite (44) der Dichtung offen ist.

13. Vorrichtung nach einem der vorhergehenden Ansprüche, bei welcher die Aufnahme (47) als ein Hohlraum oder ein Kanal ausgebildet ist, der in der Dichtung extrudiert ist.

14. Vorrichtung nach einem der vorhergehenden Ansprüche, bei welcher die Aufnahme einen Abdeckabschnitt (48) umfasst, der sich zwischen der Aufnahme (41, 47) und der äußeren Befestigungsseite (43) der Dichtung befindet.

15. Vorrichtung nach Anspruch 14, bei welcher das Rückhalteelement (20, 120) dafür eingerichtet ist, in den Abdeckabschnitt (48) der Dichtung bei der Montage darauf einzustechen.

16. Vorrichtung nach einem der Ansprüche 14 oder 15, bei welcher die Widerhaken (125) des Rückhalteelements (20, 120) dafür eingerichtet sind, mit dem Abdeckabschnitt (48) der Aufnahme ineinanderzugreifen.

17. Vorrichtung nach einem der Ansprüche 14 bis 16, bei welcher der Abdeckabschnitt (48) eine durchgehende Form aufweist.

18. Vorrichtung nach einem der Ansprüche 14 oder 15, bei welcher die Aufnahme einen durchgehenden extrudierten Gummiabschnitt der Dichtung umfasst.

19. Vorrichtung nach Anspruch 18, bei welcher das Rückhalteelement dazu eingerichtet ist, in die Aufnahme bei der Montage darauf einzustechen.

20. Verfahren zum Anbringen einer Befestigungsleiste (10, 30) an einer Dichtung (40) zum Abdichten eines Fensters in einem Fahrzeug, wobei die Befestigungsleiste wenigstens ein Rückhalteelement (20, 120) umfasst und die Dichtung einen Dichtkörper (40A) und eine erste äußere Befestigungsseite (43), die in Gebrauch an die Befestigungsleiste angrenzt, und eine zweite innere Dichtungsseite (44) aufweist, die in Gebrauch zu einem Abschnitt des Fahrzeugs weist, wobei die Dichtung eine Aufnahme zum Aufnehmen eines Rückhalteelements aufweist, und welches ein Einführen des Rückhalteelements in eine Aufnahme der Dichtung umfasst, **dadurch gekennzeichnet, dass** das Verfahren weiterhin Folgendes umfasst:
Einstechen der Dichtung mit dem Rückhalteelement (20, 120) bei der Montage der Befestigungsleiste.

21. Verfahren nach Anspruch 20, bei welchem die Dichtung eine Aufnahme (42, 47) zum Aufnehmen des Rückhalteelements (20, 120) umfasst, wobei sich die Aufnahme zwischen der inneren Dichtungsseite (44) und der äußeren Befestigungsseite (43) befindet, und das Verfahren weiterhin ein Einführen des Kopfabschnittes (20, 120) des Rückhalteelements in die Aufnahme (42, 47) umfasst.

22. Verfahren nach Anspruch 21, bei welchem die Dichtung einen Abdeckabschnitt (48) umfasst, der zwischen der Aufnahme (42, 47) und der äußeren Befestigungsseite (43) vorgesehen ist, wobei der Abdeckabschnitt (48) eine durchgehende Form aufweist und das Verfahren ein Einstechen des Rückhalteelements in den Abdeckabschnitt (48) umfasst.

23. Verfahren nach einem der Ansprüche 20 bis 22, bei welchem das Rückhalteelement (20, 120) einen spitzen Kopfabschnitt (23, 123) aufweist und das Verfahren ein Einstechen der Dichtung mit dem spitzen Kopfabschnitt (23, 123) umfasst.

24. Verfahren nach Anspruch 23, bei welchem der Kopfabschnitt (23, 123) einen oder mehrere Widerhaken (25, 125) aufweist und das Verfahren ein Ineinandergreifen der Widerhaken mit der Dichtung umfasst.

25. Verfahren nach Anspruch 24, bei welchem der Abdeckabschnitt eine Innenfläche umfasst und das Verfahren weiterhin ein Ineinandergreifen der Widerhaken des Kopfabschnitts mit der Innenfläche des Abdeckabschnitts umfasst, um das Rückhalteelement sicher in Position zu halten.

26. Verfahren nach einem der Ansprüche 20 bis 25, bei welchem die Aufnahme einen durchgehenden Abschnitt der Dichtung umfasst und das Verfahren weiterhin ein Einstechen des Kopfabschnitts des Rückhalteelements in die Aufnahme und ein Einlassen des Rückhalteelements in der Dichtung umfasst.

## Revendications

1. Bande de fixation (10, 30) et joint (40) pour assurer l'étanchéité d'une vitre dans un véhicule, la bande de fixation ayant au moins un élément de retenue (20, 120), le joint (40) ayant un corps d'étanchéité (40A) et un premier côté de fixation extérieur (43) qui, en utilisation, vient en butée contre la bande de fixation et un second côté d'étanchéité intérieur (44) qui, en utilisation, est dirigé vers une partie du véhicule ; et le joint ayant un récepteur (41, 47) pour recevoir le au moins un élément de retenue (20, 120) de la bande de fixation,
**caractérisés en ce que** l'élément de retenue (20, 120) comprend une partie de tête configurée pour percer le joint lors d'un assemblage avec celui-ci.

2. Dispositif selon la revendication 1, dans lequel l'élément de retenue comprend une partie de tête pointue (23, 123).

3. Dispositif selon les revendications 1 ou 2, dans lequel l'élément de retenue comprend une partie de tête sensiblement en forme de flèche (23, 123).

4. Dispositif selon les revendications 1 à 3, l'élément de retenue ayant un ou plusieurs crans (25, 125) pour le retenir en place dans ledit récepteur (41, 47).

5. Dispositif selon la revendication 4, dans lequel les crans (25, 125) comprennent des encoches formées sur la base de la partie de tête.

6. Dispositif selon l'une quelconque des revendications précédentes, dans lequel l'élément de retenue comprend des faces avant et arrière ayant chacune une forme sensiblement plate et dans lequel l'élément de retenue est disposé sensiblement à angle droit par rapport à la bande de fixation.

7. Dispositif selon l'une quelconque des revendications précédentes, la bande de fixation (10, 30) ayant une forme allongée s'étendant le long de son axe longitudinal et comprenant une pluralité d'éléments de retenue positionnés à des intervalles espacés le long de son axe longitudinal.

8. Dispositif selon l'une quelconque des revendications précédentes, dans lequel l'élément de retenue (20) est formé séparément de la bande de fixation et configuré pour un assemblage avec la bande de fixation.

9. Dispositif selon la revendication 8, la bande de fixation comprenant des organes de retenue qui, conjointement avec la surface intérieure de la bande, définissent un évidement pour recevoir et retenir ledit élément de retenue.

10. Dispositif selon l'une quelconque des revendications précédentes, dans lequel l'élément de retenue (120) est solidaire de la bande de fixation (30).

11. Dispositif selon l'une quelconque des revendications précédentes, dans lequel le récepteur comprend un trou borgne (47) fermé vers le côté d'étanchéité intérieur du joint (44).

12. Dispositif selon l'une quelconque des revendications 1 à 11, dans lequel le récepteur comprend un trou traversant (41) ouvert du côté d'étanchéité intérieur (44) du joint.

13. Dispositif selon l'une quelconque des revendications précédentes, dans lequel le récepteur (47) est formé comme une cavité ou un canal extrudé dans le joint.

14. Dispositif selon l'une quelconque des revendications précédentes, dans lequel le récepteur comprend une partie de recouvrement (48) située entre le récepteur (41, 47) et le côté de fixation extérieur (43) du joint.

15. Dispositif selon la revendication 14, dans lequel l'élément de retenue (20, 120) est configuré pour percer la partie de recouvrement (48) du joint lors d'un assemblage avec celle-ci.

16. Dispositif selon l'une quelconque des revendications 14 à 15, dans lequel les crans (125) de l'élément de retenue (20, 120) sont configurés pour s'engager avec la partie de recouvrement (48) du récepteur.

17. Dispositif selon les revendications 14 à 16, dans lequel la partie de recouvrement (48) comprend une forme continue.

18. Dispositif selon les revendications 14 à 15, dans lequel le récepteur comprend une partie du joint continue en caoutchouc extrudé.

19. Dispositif selon la revendication 18, dans lequel l'élément de retenue est configuré pour percer le récepteur lors d'un assemblage avec celui-ci.

20. Procédé pour attacher une bande de fixation (10, 30) à un joint (40), afin d'assurer l'étanchéité d'une vitre dans un véhicule, la bande de fixation comprenant au moins un élément de retenue (20, 120), et le joint ayant un corps d'étanchéité (40A) et un premier côté de fixation extérieur (43) qui, en utilisation, vient en butée contre la bande de fixation et un second côté d'étanchéité intérieur (44) qui, en utilisation, est dirigé vers une partie du véhicule, le joint ayant un récepteur pour recevoir un élément de retenue, comprenant l'insertion de l'élément de retenue dans un récepteur du joint, **caractérisé en ce que** le procédé comprend en outre
le perçage du joint avec l'élément de retenue (20, 120) lors d'un assemblage de la bande de fixation.

21. Procédé selon la revendication 20, dans lequel le joint comprend un récepteur (42, 47) pour recevoir l'élément de retenue (20, 120), le récepteur étant situé entre le côté d'étanchéité intérieur (44) et le côté de fixation extérieur (43), le procédé comprenant en outre l'insertion de la partie de tête (20, 120) de l'élément de retenue dans le récepteur (42, 47).

22. Procédé selon la revendication 21, le joint comprenant une partie de recouvrement (48) disposée entre le récepteur (42, 47) et le côté de fixation extérieur (43), la partie de recouvrement (48) ayant une forme continue, le procédé comprenant l'élément de retenue perçant la partie de recouvrement (48).

23. Procédé selon les revendications 20 à 22, l'élément de retenue (20, 120) ayant une partie de tête pointue (23, 123), le procédé comprenant le perçage du joint avec la partie de tête pointue (23, 123).

24. Procédé selon la revendication 23, la partie de tête (23, 123) ayant un ou plusieurs crans (25, 125), le procédé comprenant l'engagement des crans avec le joint.

25. Procédé selon la revendication 24, la partie de recouvrement comprenant une surface intérieure, le procédé comprenant en outre l'engagement des crans de la partie de tête avec la surface intérieure de la partie de recouvrement pour maintenir fermement l'élément de retenue en place.

26. Procédé selon les revendications 20 à 25, le récepteur comprenant une partie continue du joint, le procédé comprenant également le perçage du récepteur avec la partie de tête de l'élément de retenue et l'encastrement de l'élément de retenue dans le joint.
